# EUROPÄISCHE PATENTSCHRIFT

(11) **EP 2 240 419 B1**
(45) Veröffentlichungstag und Bekanntmachung des Hinweises auf die Patenterteilung: **22.04.2015**
(21) Anmeldenummer: 08868209.1
(22) Anmeldetag: 15.12.2008
(51) Int. Cl.: C04B 28/14, C04B 24/08, C04B 40/00

(54) **HYDROPHOBIERTES BINDEMITTELGEMISCH UND DARAUS HERGESTELLTE BAUMATERIALIEN**
HYDROPHOBIC BINDER MIXTURE, AND CONSTRUCTION MATERIALS MADE THEREFROM
MÉLANGE DE LIANTS RENDU HYDROPHOBE ET MATÉRIAUX DE CONSTRUCTION PRODUITS À PARTIR DE CE MÉLANGE

(30) Priorität: 27.12.2007 DE 102007062773
(43) Veröffentlichungstag der Anmeldung: 20.10.2010
(73) Patentinhaber: Baerlocher GmbH, 85716 Unterschleissheim (DE)
(72) Erfinder: HAUK, Jürgen, 85354 Freising (DE)
(74) Vertreter: Fiesser, Gerold Michael
(86) Internationale Anmeldenummer: PCT/EP2008/010657
(87) Internationale Veröffentlichungsnummer: WO 2009/083129

(56) Entgegenhaltungen:
- WO-A-2004/033388
- WO-A-2004/103928
- DE-A1- 3 105 407
- FR-A- 2 862 978
- JP-A- 2006 225 214

## Beschreibung

Gegenstand der Erfindung ist ein Gemisch aus einem mineralischen Bindemittel auf Basis von Calciumsulfat und mindestens einem Additiv, das dem mineralischen Bindemittel auf Basis von Calciumsulfat hydrophobe Eigenschaften verleiht. Dieses Bindemittelgemisch enthält ein mineralisches Bindemittel auf Basis von Calciumsulfat und mindestens ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% oder der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch, oder beides, ausmacht. Bei erfindungsgemäßen Baumaterialien, die aus einem erfindungsgemäßen Bindemittelgemisch erhältlich sind, kann es sich beispielsweise um Gipsplatten, Gipsblöcke oder sonstige Formteile, insbesondere Gipskartonplatten handeln.

Bei der Herstellung von Gipserzeugnissen, insbesondere bei der Herstellung von Gipsformkörpern und daraus erhältlichen Baumaterialien wie Gipskartonplatten, ist es häufig erforderlich, die Beständigkeit gegenüber Wasser zu verbessern. Hierzu werden gemäß dem Stand der Technik die Gipsformkörper häufig wasserabweisend ausgerüstet. Dies kann beispielsweise durch Aufbringen einer hydrophoben Beschichtung auf einen entsprechenden Formkörper geschehen, beispielsweise durch Behandlung mit hydrophobierenden Mitteln, oder aber durch eine sogenannte Massenhydrophobierung, bei der den Gipsbestandteilen ein entsprechendes Hydrophobierungsmittel beigemischt wird.

Als hydrophobierende Zusätze für Gips werden im Stand der Technik eine Vielzahl unterschiedlicher Materialien beschrieben.

So beschreibt beispielsweise die DE 100 49 072 A1 Baustoffmassen, die die carbonsäureesterhaltige, hydrophobierende Pulver enthalten. Gemäß Druckschrift wird als hydrophobierendes Pulver ein redispergierbares Dispersionspulver eingesetzt, dass mindestens einen Carbonsäureester enthält. Problematisch wirkt sich bei den beschriebenen Zusammensetzungen aus, dass die Hydrophobierung häufig nicht ausreichend wirksam ist und darüber hinaus die Carbonsäureester einem Hydrolysierungsprozess unterliegen können, der die Wirkung über die Zeit verändert.

Die US 6,547,874 B2 betrifft ein Hydrophobierungsmittel für Gips enthaltende Baumaterialien, die mit Organopolysiloxanen behandelte Bestandteile enthalten. Der Einsatz von Siloxanen bei der Hydrophobierung von gipshaltigen Baumaterialien führt jedoch in der Praxis häufig zu Problemen beim Recycling entsprechender Materialien. Darüber hinaus wird häufig zum Einstellen eine vorgeschriebene oder gewünschte Porosität erschwert, da die Silikone antagonistisch zu solchen Mitteln wirken können, die dem Gips durch Lufteinschluss Porosität verleihen sollen. Weiterhin weist der Einsatz entsprechender Silikone den Nachteil auf, dass die Materialien teuer und unter Umständen schwierig zu beschaffen sind.

Die DE 41 07 385 C2 betrifft eine trockene pulverförmige Putzmischung unter Verwendung von calciniertem Rauchgasgips der Hilfs- und Zusatzstoffe enthält. Der Einsatz von Fettsäuresalzen wird nicht beschrieben.

Die DE 31 05 407 A1 betrifft einen wasserabweisenden Gipsmörtel, der zur Hydrophobierung ein Fettamin, eine Säure und ein Alkalisiliconat enthält. Die Druckschrift beschreibt, dass Salze von Fettsäuren bei Gips nur eine unzureichende Wirkung hinsichtlich der Hydrophobierung aufweisen.

Die DE 44 33 864 A1 beschreibt ein Verfahren zur wasserabweisenden Impregnierung von Gips durch Behandlung mit Organosiloxanen und Alkalisilikat. Der Nachteil, der sich beim Einsatz von Siloxanen bzw. Silikonen wurde bereits oben beschrieben.

Die DE 32 42 598 A1 betrifft ein Verfahren zur Herstellung von Formkörpern, insbesondere Brücken, unter Verwendung von calciumsulfathaltigen Bindemitteln, die Zellulosefasern enthalten, die in besonderer Weise mit Wasser getränkt sind. Der Einsatz von Fettsäuresalzen wird in der Druckschrift nicht beschrieben.

Die DE 41 28 424 A1 beschreibt ein Verfahren zur Herstellung von wasserabweisenden porösen Gipsformkörpern die Alkylwasserstoffpolysiloxane enthalten.

Die DE 697 04 312 T2 betrifft eine Gipsmischung, die ein hydrophobes Additiv enthält. Auch hier werden wieder Silane zur Hydrophobierung des Gipspulvers eingesetzt.

Die DE 195 06 398 A1 beschreibt ein Verfahren zur Hydrophobierung von Gipswerkstoffen, bei dem ein in Wasser redispergierbares Dispersionspulver auf der Basis von Vinylacetat-Mischpolymerisaten mit Ethylen und/oder Vinylestern von C₅- bis C₁₅-Monocarbonsäuren und dergleichen zur Hydrophobierung eingesetzt wird.

Die DE 196 28 749 A1 beschreibt ein Verfahren zur Hydrophobierung eines mehr mineralischen Trägers und Hydrophobierungsmittel zur Verfahrensdurchführung, wobei das Hydrophobierungsmittel eine spezielle Montanwachsfraktion eingesetzt wird. Insgesamt ist festzuhalten, dass der Stand der Technik sich hauptsächlich mit dem Einsatz von Silikonen und Wachsen zur Hydrophobierung von gipshaltigen Baumaterialien auseinandersetzt. Der Einsatz von Fettsäuresalzen wird nicht erwähnt bzw. als nachteilig und nicht zielführend beschrieben. Die im Rahmen des Standes der Technik beschriebenen Methoden und Hydrophobierungsmittel weisen jedoch alle gemeinsam verschiedene grundsätzliche Probleme auf. Die eingesetzten Verbindungen sind in der Regel teuer, nicht immer und in ausreichender Menge verfügbar sowie häufig auf Basis von Erdöl hergestellt. All diese Fakten weisen durch ein für die Zukunft zu erwartendes und bereits derzeit erkennbares Eigenschaftsprofils solcher Zusammensetzungen deutliche Nachteile auf. Die Hydrophobierung von Gipsmaterialien ist teuer und unzuverlässig und erfüllt die Anforderungen an ein Massenprodukt in ökologischer Hinsicht nicht oder nur in unzureichender Weise.

Die JP2006225214 offenbart mineralische Baustoffe, welche durch Vermengung von 400 T Zement, 610 T Standardsand, 180 T Quarzsand, 225 T Wasser und zum Zweck der Hydrophobierung mit 8 T einer fettsäuresalzhaltigen Mischung entstehen. Letztere fettsäuresalzhaltige Mischung enthält 60-75 Gew% Kaliumsalz einer 12 - 14 C-atomigen Fettsäure und 25-40 Gew% Kaliumsalz einer 16 - 18 C-atomigen Fettsäure. Der Anteil der Fettsäuresalze mit 8 - 14 C-Atomen an der Gesamtmenge dieser Kombination von Fettsäuresalzen beträgt somit 60-75 Gew%. Allerdings handelt es sich in beiden Fällen um Salze desselben Metallkations, nämlich Kalium. Bezüglich des Herstellungsverfahrens des Fettsäuresalzgemischs wird lediglich das Ergebnis "Mischung" erwähnt.

Die JP10139510 offenbart ein Bindemittelgemisch, enthaltend ein mineralisches Bindemittel auf Basis Zement oder Gips und als Hydrophobierungsmittel eine Kombination aus Sodium- oder Aminsalz (A) mit Kalziumsalz (B) von Fettsäuren mit 8 - 22 C-Atomen; bevorzugt der Ölsäure (18 C). Definiert wird nur das Mischungsverhältnis A : B, über den Anteil bestimmter Fettsäuren mit bestimmter Anzahl von C-Atomen wird nichts offenbart.

Es bestand daher ein Bedarf nach Verfahren zur Hydrophobierung von Gipsmaterialien bzw. nach entsprechenden hydrophobierten Baumaterialien auf Gipsbasis, das die oben genannten Nachteile nicht aufweist. Insbesondere bestand ein Bedarf an hydrophobiertem Gips und daraus hergestellten Baumaterialien, die verfügbar, in ökologisch vertretbarer Weise erhältlich und auf absehbare Zeit kostengünstig herstellbar sind.

Die der vorliegenden Erfindung zugrunde liegende Aufgabe wird durch Bindemittelgemische, Verfahren zu deren Herstellung und Baumaterialien, die auf diesen Gemischen basieren, gelöst.

Gegenstand der vorliegenden Erfindung ist daher ein Bindemittelgemisch, enthaltend ein mineralisches Bindemittel auf Basis von Calciumsulfat und mindestens ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.% oder mehr als 20 Gew.% oder der Anteil an Fettsäuren mit 8 bis 14 C-Atomen 10 Gew.-% oder mehr als 10 Gew.%, bezogen auf die Gesamtmenge der Fettsäuresalze im Fettsäuresalzgemisch, oder beides, ausmacht.

Als "Fettsäuren" werden im Sinne der Erfindung Mono- oder Polycarbonsäuren mit mindestens 6 C-Atomen bezeichnet, also Verbindungen, die mindestens eine Carboxylgruppe und verzweigte oder unverzweigte Kohlenstoffketten aufweisen. Unter "Fettsäuresalzen" werden im Rahmen des vorliegenden Textes Salze, insbesondere die Metallsalze der oben genannten Fettsäuren verstanden. Die Fettsäuresalze werden auch als Seifen bezeichnet. Eine "Fettsäure" im erfindungsgemäßen Sinn kann darüber hinaus noch Doppelbindungen, Hydroxy- oder Epoxygruppen tragen.

Als Bestandteil der einsetzbaren Fettsäuresalzgemische eignen sich die Salze der gesättigten sowie die Salze der ungesättigten Fettsäuren. Es kann bevorzugt sein, die Salze der gesättigten Fettsäuren einzusetzen, in einigen Fällen hat es sich jedoch auch als vorteilhaft erwiesen, die Salze der ungesättigten Fettsäuren einzusetzen.

Als Metallkationen zur Bildung der Fettsäuresalzgemische eignen sich Metallkationen ausgewählt aus der Gruppe der Kationen von Alkalimetallen, Erdalkalimetallen, Zink, Aluminium und seltenen Erden.

Bevorzugte Alkalimetallsalze sind die Salze des Lithiums, Natriums und Kaliums. Bevorzugte Erdalkalimetallsalze sind die Salze des Magnesiums, Calciums, Strontiums und Bariums. Unter den Salzen der seltenen Erden eignen sich insbesondere Cer und Lanthan.

In einer bevorzugten Ausführungsform der Erfindung handelt es sich bei den Fettsäuresalzen um ein Gemisch, das mindestens ein Fettsäuresalz aus der Gruppe der Alkalimetallsalze und mindestens ein Fettsäuresalz aus der Gruppe der Erdalkalimetallsalze oder der Salze mindestens eines Metalls aus der Gruppe der seltenen Erden enthält. Es kann bevorzugt sein, wenn ein Fettsäuresalzgemisch ein Gemisch aus mindestens einem Alkalimetallsalz und mindestens einem Erdalkalimetallsalz enthält. Beispielsweise eignen sich Fettsäuresalzgemische, die Natrium-, oder Kalium- und Calcium- oder Magnesiumsalze entsprechend geeigneter Fettsäuren enthalten.

In einer weiteren bevorzugten Ausführungsform wird beispielsweise ein Gemisch aus Natrium- und Calciumsalzen eingesetzt. In einer weiteren bevorzugten Ausführungsform der Erfindung handelt es sich bei den Fettsäuresalzgemischen um ein Gemisch aus etwa 10 bis etwa 50 Gew.-% Natriumsalzen und etwa 90 bis etwa 50 Gew.-% Calciumsalzen, bezogen auf das Gesamtgewicht der Fettsäuresalze im Fettsäuresalzgemisch. Besonders bevorzugt ist der Einsatz von Natrium- und Calciumsalzen im Gewichtsverhältnis von etwa 1:2.

Wenn ein erfindungsgemäßes Bindemittelgemisch Fettsäuren unterschiedlicher Kettenlänge enthält, so kann es grundsätzlich möglich sein, dass die Metallkationen im Wesentlichen statistisch verteilt auf die Fettsäuren mit unterschiedlichen Kettenlängen vorliegen. Wenn ein erfindungsgemäßes Bindemittelgemisch gesättigte und ungesättigte Fettsäuren enthält, so kann es grundsätzlich möglich sein, dass die Metallkationen im Wesentlichen statistisch verteilt auf die gesättigten und die ungesättigten Fettsäuren vorliegen. Es ist jedoch im Rahmen der vorliegenden Erfindung ebenso vorgesehen, dass unterschiedliche Fettsäuren, die sich beispielsweise in der Kettenlänge oder in der Sättigung unterscheiden in statistisch signifikanter Weise unterschiedliche Metallkationen aufweisen.

So ist es beispielsweise erfindungsgemäß möglich, dass ein in einem erfindungsgemäßen Bindemittel vorliegendes Fettsäuresalzgemisch zwei oder mehr Salze von Fettsäuren enthält, wobei beispielsweise jeweils ein bestimmter Fettsäurerest ein bestimmtes Metallkation trägt, während ein anderer Fettsäurerest ein anderes Metallkation trägt. Dabei können beispielsweise Gemische von Fettsäuresalzen bevorzugt sein, die ein Gemisch von Natrium- und Calciumkationen enthalten.

Geeignete Fettsäuresalzgemische werden beispielsweise erhalten, wenn ein Fett oder Öl mit geeigneten Metallverbindungen, beispielsweise Metalloxiden, Metallhydroxiden, Metallcarbonaten oder Metallsalzen von Mineralsäuren, beispielsweise Natriumhydroxid und Calciumhydroxid, umgesetzt wird.

Dabei kann beispielsweise zuerst ein bestimmtes Metallsalz und anschließend ein weiteres Metallsalz zum Reaktionsgemisch gegeben werden. Die Mengen der Metallsalze werden beispielsweise stöchiometrisch zu den Mengen der gewünschten Salze ausgewählt. In einer besonderen Ausführungsform der Erfindung kann das unmittelbare Verfahrensprodukt einer solchen Reaktion als Fettsäuresalzgemisch eingesetzt werden. In diesem Fall sind nach dem Hydrolyseschritt keine weiteren Aufreinigungsschritte erforderlich.

Als Kationen in geeigneten Fettsäureammoniumsalzen eignen sich im Rahmen der vorliegenden Erfindung grundsätzlich alle Verbindungen, die durch entsprechende Umsetzung zu einem Ammoniumsalz der entsprechenden Fettsäure führen. Im Rahmen des vorliegenden Textes wird dabei auch Ammoniak als "Amin" bezeichnet. Dabei können einsetzbare Ammoniumsalze beispielsweise durch entsprechende Umsetzung von Aminen oder Amiden wie Alkylmonoaminen, Alkyldiaminen, Alkylpolyaminen, Dialkylaminen oder Polyalkylaminen erhalten werden. Geeignete Ammoniumsalze leiten sich daher beispielsweise von primären Mono- oder Polyaminoverbindungen mit 2 bis etwa 40, beispielsweise 6 bis etwa 20 C-Atomen ab. Beispielsweise sind dies Ammoniak, Methylamin, Ethylamin, n-Propylamin, i-Propylamin, n-Propylamin, sek.-Propylamin, tert.-Butylamin, die isomeren Pentylamine, Hexylamine, Heptylamine und deren höhere Homologen mit 8, 9, 10, 11, 12, 13, 14, 15, 16, 17, 18, 19, 20, 21 oder 22 C-Atomen, beispielsweise Stearylamin, 1-Aminoisobutan, substituierte Amine mit 2 bis etwa 20 C-Atomen wie 2-(N,N-Dimethylamino)-1-aminoethan. Geeignete Diamine sind weisen beispielsweise ein Molekulargewicht von etwa 32 bis etwa 200 g/mol auf, wobei die entsprechenden Diamine beispielsweise zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Ebenfalls geeignet sind aliphatische Aminoalkohole mit 2 bis etwa 40, vorzugsweise 6 bis etwa 20 C-Atomen, beispielsweise Triethanolamin, Tripropanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen.

Ebenfalls als Ammoniumsalze geeignet sind beispielsweise Verbindungen, in denen die Aminogruppe an einem substituierten aromatischen oder heteroaromatischen System gebunden vorliegt, beispielsweise Aminobenzoesäure, Aminosalicylsäure oder Aminopyridincarbonsäure und deren geeignete Derivate.

In einer weiteren Ausführungsform der Erfindung beträgt der Anteil der Fettsäuresalze mit 8 bis 17 C-Atomen an den gesamten Fettsäuresalzen mehr als 30, 50, 60, 70 oder 80 Gew.-%.

In einer weiteren Ausführungsform der Erfindung ist das Fettsäuresalz, das an den gesamten Fettsäuresalzen den größten Anteil in Gewichtsprozent ausmacht, ein Salz einer Fettsäure mit 8 bis 17 C-Atomen. Besonders bevorzugt handelt es sich dabei um ein Laurate oder ein Myristate.

In einer bevorzugten Ausführungsform der Erfindung beträgt die mittlere Kettenlänge der gesamten im Fettsäuresalzgemisch vorliegenden Fettsäuresalze 9 bis 16 C-Atome, insbesondere 10 bis 14 C-Atome.

In einer bevorzugten Ausführungsform der Erfindung enthält ein Fettsäuresalzgemisch Fettsäuresalze ausgewählt aus der Gruppe bestehend aus Fettsäuresalzen der Capryl-, Pelargon-, Caprin-, Laurin-, Laurolein-, Myristin-, Myristolein-, Palmitin-, Palinitolein-, Margarin-, Undecylen- und Palmitoleinsäure. Weitere bevorzugte Fettsäuren sind Linolsäure und Linolensäure. Darüber hinaus sind beispielsweise Fettsäuren geeignet, die eine oder mehrere OH-Gruppen oder eine oder mehrere Epoxygruppen aufweisen.

In einer weiteren Ausführungsform der Erfindung macht die Summe der Anteile der Fettsäuresalze der Caprylate, Laurate und Myristate an den gesamten im Fettsäuresalzgemisch vorliegenden Fettsäuresalzen mehr als 50 Gewichts% aus. In einer weiteren Ausführungsform ist der Anteil der Laurate größer als 30, insbesondere größer 40 Gew.-%. In einer bevorzugten Ausführungsform der Erfindung ist der Anteil der Stearate geringer als 10 %, insbesondere geringer als 5 %. In einer weiteren bevorzugten Ausführungsform ist der Anteil der Oleate geringer als 15 %, insbesondere geringer als 10 %. Besonders bevorzugt ist, wenn in dem erfindungsgemäßen Hydrophobierungsmittel der Anteil an Salzen von Fettsäuren mit 18 Kohlenstoffatomen, insbesondere von Stearaten und/oder Oleaten, geringer als 25 %, insbesondere geringer als 15 % oder 10 % ist.

In einer weiteren Ausführungsform der Erfindung liegt der Gesamtanteil der Fettsäuresalze am Fettsäuresalzgemisch zwischen 5 und 95 Gew.-%, besonders bevorzugt zwischen 10 und 90 % oder zwischen 20 und 85 %. In bevorzugten Ausfuhrungsformen ist der Anteil der Fettsäuresalze höher als 10 %, 20 % oder 50 %.

In einer weiteren Ausführungsform der Erfindung sind die Fettsäuresalze Hydrolyseprodukte eines natürlichen Fettes oder Öles. "Natürlich" bedeutet im Sinne der Erfindung, dass das Fett oder Öl ursprünglich aus einer natürlichen Quelle stammt. Das Fett oder Öl kann aber auch nachbehandelt sein, beispielsweise durch teilweise oder vollständige Hydrierung oder durch Epoxydierung von Doppelbindungen. Dem Fett oder Öl können auch Zusätze beigemischt sein. Besonders geeignet sind natürliche Fette oder Öle, die einen vergleichsweise hohen Anteil von Fettsäuren mit niedrigen Kettenlängen enthalten. Besonders bevorzugt ist die Verwendung von Kokosöl, insbesondere von Kokosöl mit einem hohen Anteil an Laurinsäure (zwischen 45 und 51 Gew.-%) und Myristinsäure (16,5 bis 18,5 Gew.-%), das auch als Kokosfett oder Kokosbutter bezeichnet wird. Ebenfalls geeignet ist Palinkernfett.

Die Hydrolyse der natürlichen Fette erfolgt beispielsweise durch Zusatz von Metallhydroxiden.

Ein in einem Bindemittelgemisch einsetzbares Fettsäuresalzgemisch kann neben den oben beschriebenen Fettsäuresalzen noch weitere Inhaltsstoffe enthalten. Beispielsweise sind dies mehrwertige Alkohole. Als mehrwertige Alkohole werden Verbindungen bezeichnet, die mindestens 2 OH-Gruppen aufweisen. Grundsätzlich eignen sich lineare, verzweigte, gesättigte oder ungesättigte sowie homocyclische oder heterocyclische ungesättigte Alkohole als Bestandteil der einsetzbaren Fettsäuresalzgemische. Es hat sich jedoch in einigen Fällen als vorteilhaft erwiesen, wenn als mehrwertige Alkohole Verbindungen eingesetzt werden, die nur Kohlenstoff, Wasserstoff und Sauerstoff als atomare Bestandteile aufweisen. Die Molmasse entsprechender mehrwertiger Alkohole kann zwischen etwa 62 (Ethylenglykol) und mehreren Tausend, beispielsweise etwa 100.000, liegen. Ein einsetzbares Fettsäuresalzgemisch kann dabei beispielsweise nur einen mehrwertigen Alkohol oder zwei oder mehr mehrwertige Alkohole enthalten. Die Alkohole können sich beispielsweise in ihrer Molmasse oder in der Zahl der OH-Gruppen oder in mehreren unterschiedlichen Merkmalen unterscheiden.

Geeignet sind beispielsweise mehrwertige Alkohole wie Ethylenglykol, Propylenglykol, Butylenglykol, Pentylenglykol, Hexylenglykol, Propantriol, Trimethylolpropan, Pentaerythrit, Dihydroxycyclohexan, Diethylenglykol, Triethylenglykol sowie die Dimeren, trimeren oder oligomeren Derivate der oben genannten Dialkohole, Oligoglycerin, Polyglycerin, Polyvinylalkohol und dergleichen.

E kann erfindungsgemäß bevorzugt sein, wenn ein Fettsäuresalzgemisch einen niedermolekularen mehrwertigen Alkohol mit 2, 3, oder 4 OH-Gruppen, insbesondere Propantriol enthält.

Der Anteil an mehrwertigem Alkohol oder mehrwertigen Alkoholen, beträgt, sofern diese Verbindungen im Fettsäuresalzgemisch enthalten sind, bis zu etwa 40 Gew.%, insbesondere etwa 1 bis etwa 30 oder etwa 5 bis etwa 20 oder etwa 8 bis etwa 13 Gew.%.

Ein Fettsäuresalzgemisch gemäß Anspruch 1 kann darüber hinaus einen oder mehrere Monoalkohole, beispielsweise Fettalkohole, enthalten. Geeignet sind hierbei lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol eingesetzt werden. Die genannten Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monoalkohole und insbesondere solche mit etwa 4 bis etwa 18 C-Atomen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von etwa 1.000 bis etwa 2.000 einsetzbar.

Das Fettsäuresalzgemisch gemäß Anspruch 1 lässt sich grundsätzlich zu beliebigen Zwecken einsetzen. Es hat sich jedoch im Rahmen der vorliegenden Erfindung gezeigt, dass das Fettsäuresalzgemisch sich ausgezeichnet dazu eignet, Baumaterialien bestimmte Eigenschaften im Hinblick auf ihre Wechselwirkung mit Wasser zu verleihen, insbesondere diese Baumaterialien zu hydrophobieren. Ein Fettsäuresalzgemisch gemäß Anspruch 1 eignet sich also als Hydrophobierungsmittel. Wenn im Rahmen des vorliegenden Textes auf Hydrophobierungsmittel Bezug genommen wird, so ist dies auch als Bezugnahme auf die Fettsäuresalzgemische gemäß Anspruch 1 zu verstehen.

In einer weiteren Ausführungsform der Erfindung enthält das Fettsäuresalzgemisch Zusatzstoffe. Geeignete Zusatzstoffe sind beispielsweise Lösungsmittel, Bindemittel, Lösungsvermittler, Füllstoffe, weitere Hydrophobierungsmittel, Tenside, Emulgatoren, Viskositätsverbesserer, Pigmente, Farbstoffe, Konservierungsstoffe, Geliermittel, Antibackmittel, pH-Modifikationsmittel, Puffer, Reaktionsbeschleuniger, Reaktionsverzögerer, Kolloide, Polymere oder Luftschleppmittel oder Gemische aus zwei oder mehr davon, enthalten.

Ein Fettsäuresalzgemisch gemäß Anspruch 1 kann beispielsweise zusätzlich Bindemittel, Tenside, Emulgatoren, Kolloide oder Polymere enthalten. Diese Zusatzstoffe sind beispielsweise enthalten, um die Dispergierbarkeit und Vermischbarkeit des Fettsäuresalzgemischs mit einem weiteren Material, insbesondere einem Baumaterial, zu verbessern. Einsetzbare entsprechende Zusatzstoffe sind Fettsäurederivate, wie Ester, Wachse, Polymere, insbesondere ionische Polymere und Detergenzien.

Im Rahmen einer weiteren Ausführungsform der Erfindung enthält eine Zusammensetzung ein oder mehrere Tenside. Als Tenside eignen sich beispielsweise anionische Tenside, nichtionische Tenside oder kationische Tenside. Es hat sich in einigen Fällen herausgestellt, dass die Gegenwart von Tensiden die zur Erzielung eines gewünschten Hydrophobierungseffektes erforderliche Menge an Hydrophobiermittel senkt. Dies entspricht nicht der Erwartung bei Zugabe eines hydrophilen Stoffs und ist, ohne an eine bestimmte Theorie gebunden sein zu wollen, möglicherweise auf eine verbesserte Verteilung des Hydrophobiermittels in der Zusammensetzung zurückzuführen.

Im Rahmen einer weiteren Ausfiihrungsform der Erfindung enthält ein erfindungagemäßes Bindemittelgemisch (nachfolgend auch als "Zusammensetzung" bezeichnet) ein oder mehrere Tenside bzw. Emulgatoren. Als Tenside bzw. Emulgatoren eignen sich beispielsweise anionische Tenside, nichtionische Tenside oder kationische Tenside. Es hat sich in einigen Fällen herausgestellt, dass die Gegenwart von Tensiden die zur Erzielung eines gewünschten Hydrophobierungseffektes erforderliche Menge an Hydrophobiermittel senkt. Dies entspricht nicht der Erwartung bei Zugabe eines hydrophilen Stoffs und ist, ohne an eine bestimmte Theorie gebunden sein zu wollen, möglicherweise auf eine verbesserte Verteilung des Hydrophobiermittels in der Zusammensetzung zurückzuführen.

Typische Beispiele für im Rahmen der erfindungsgemäßen Bindemittelgemische geeignete anionische Tenside sind Seifen, Alkylbenzolsulfonate, sekundäre Alkansulfonate, Olefinsulfonate, Alkylethersulfonate, Glycerinethersulfonate, α-Methylestersulfonate, Sulfofettsäuren, Alkyl- und/oder Alkenylsulfate, Alkylethersulfate, Glycerinethersulfate, Hydroxymischethersulfate, Fettalkohol(ether)-phosphate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

Bevorzugt sind anionische Tenside ausgewählt aus der Gruppe, die gebildet wird von Alkyl- und/oder Alkenylsulfate, Alkylethersulfate, Alkylbenzolsulfonate, Seifen, Monoglycerid(ether)sulfate und Alkansulfonate, insbesondere Fettalkoholsulfate, Fettalkoholethersulfate, sekundäre Alkansulfonate und lineare Alkylbenzolsulfonate.

Unter Alkyl- und/oder Alkenylsulfaten, die auch häufig als Fettalkoholsulfate bezeichnet werden, sind die Sulfatierungsprodukte primärer Alkohole zu verstehen. Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C16/18-Talgfettalkoholen bzw. pflanzliche Fettalkohole vergleichbarer C-Kettenverteilung in Form ihrer Natriumsalze.

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palinoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

Als Alkylbenzolsulfonate können beispielsweise Dodecylbenzolsulfonate, Tetradecylbenzolsulfonate, Hexadecylbenzolsulfonate sowie deren technische Gemische in Form der Natriumsalze eingesetzt werden.

Unter Seifen sind schließlich Fettsäuresalze der linearen oder verzweigten, gesättigten oder ungesättigten Carbonsäuren mit 6 bis 22 und vorzugsweise 12 bis 18 Kohlenstoffatomen zu verstehen, wobei als Kation beispielsweise ein Alkali- und/oder Erdalkali-, Ammonium-, Alkylammonium- oder Alkanolammoniumion vorliegen kann. Die hier genannten Seifen verstehen sich als Ergänzung zu gegebenenfalls im erfindungsgemäßen Gemisch vorliegenden Fettsäuresalzen und die hier vorgenommene fakultative Aufzählung berührt Angaben zu zwingend in der erfindungsgemäßen Zusammensetzung vorliegenden Fettsäuresalzen nicht. Sofern Angaben zu fakultativ vorliegenden Fettsäuresalzen mit Angaben zu zwingend vorliegenden Fettsäuresalzen kollidieren, so gehen die Angaben zu den zwingend vorliegenden Fettsäuresalzen in jedem Fall vor. Dies gilt beispielsweise für Stoffangaben genauso wie für Mengenangaben.

Typische Beispiele sind die Natrium-, Kalium-, Magnesium-, Ammonium- und Triethanolammoniumsalze der Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Beispielsweise werden Kokos- oder Palmkernfettsäure in Form ihrer Natrium- oder Kaliumsalze eingesetzt.

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze.

Die erfindungsgemäßen Bindemittelgemische können als Tenside oder als Emulgatoren nichtionische Tenside enthalten. Typische Beispiele für nichtionische Tenside sind Alkoxylate von Alkanolen, endgruppenverschlossene Alkoxylate von Alkanolen ohne freie OH-Gruppen, alkoxylierte Fettsäureniedrigalkylester, Hydroxymischether, Alkylphenolpolyglycolether, Fettsäurepolyglycolester, Fettsäureamidpolyglykolether, Fettaminpolyglykolether, alkoxylierte Triglyceride, Mischether bzw. Mischformale, Alk(en)yloligoglykoside, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen.

Geeignet sind beispielsweise die nichtionische Tenside ausgewählt aus der Gruppe, die gebildet wird von Alkyl- und/oder Alkenyloligoglykoside, Hydroxymischethem, Alkoxylaten von Alkanolen, insbesondere Fettalkoholpolyethylenglykol/polypropylenglykolether (FAEO/PO) bzw. Fettalkoholpolypropylenglykol/polyethylenglykolether (FAPO/EO), endgruppenverschlossenen Alkoxylaten von Alkanolen, insbesondere endgruppenverschlossene Fettalkoholpolyethylenglykol/polypropylenglykolether bzw. endgruppenverschlossene Fettalkoholpolypropylenglykol/polyethylenglykolether, und Fettsäureniedrigalkylestern und Aminoxiden.

Ebenfalls geeignet sind die Alkyl- und/oder Alkenyloligoglykoside. Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Der Oligomerisierungsgrad p, d. h. die Verteilung von Mono- und Oligoglykosiden, beträgt beispielsweise zwischen 1 und 10. Während p in einer gegebenen Verbindung stets ganzzahlig sein muss und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestem oder im Verlauf der Hydrierung von Aldehyden aus der Roelen'schen Oxosynthese erhalten werden. Der Alkyl- bzw. Alkenylrest kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können.

Weiterhin als Bestandteil der erfindungsgemäßen Bindemittelgemische geeignet sind Hydroxymischether, die sich beispielsweise von Alkoxylaten von einwertigen aliphatischen, gesättigten, geradkettigen oder verzweigten Alkoholen mit 4 bis 18 Kohlenstoffatomen ableiten.

Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylalkohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für derartige verzweigte Alkohole sind so genannte Oxoalkohole, die meist 2 bis 4 Methylgruppen als Verzweigungen tragen und nach dem Oxoprozess hergestellt werden und so genannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole können beispielsweise in Form ihrer Alkoxylate eingesetzt, die durch Umsetzung der Alkohole in beliebiger Reihenfolge mit Ethylenoxid, Propylenoxid und/oder Butylenoxid auf bekannte Weise hergestellt werden.

Ebenfalls geeignet sind sind Fettalkoholpolyethylenglykol/polypropylenglykolether oder Fettalkoholpolypropylenglykol/polyethylenglykolether, die gegebenenfalls endgruppenverschlossen sind. Beispielsweise steht der Fettalkoholrest für einen aliphatischen, gesättigten, geradkettigen oder verzweigten Alkylrest mit 8 bis 16 C-Atomen. Es handelt sich bei den erfindungsgemäß einsetzbaren Fettalkoholpolyethylenglykol/polypropylenglykolethern oder Fettalkoholpolypropylenglykol/polyethylenglykolethern beispielsweise um Anlagerungsprodukte von 1 bis 20 Mol Ethylenoxid an monofunktionelle Alkohole. Als Alkohole sind die oben beschriebenen Alkohole wie Fettalkohole, Oxoalkohole und Guerbetalkohole geeignet. Ebenfalls geeignet sind von solchen Alkoholethoxylaten solche, die eine eingeengte Homologenverteilung aufweisen.

Die endgruppenverschlossenen Verbindungen sind beispielsweise mit einer Alkylgruppe mit 1 bis 8 C-Atomen verschlossen. Häufig werden derartige Verbindungen in der Literatur auch als Mischether bezeichnet. Geeignete Vertreter sind Methylgruppenverschlossene Verbindungen. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Ebenfalls als Tenside oder Emulgatoren im Rahmen der erfindungsmäßen Zusammensetzungen geeignet sind alkoxylierte Fettsäureniedrigalkylester. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestem.

Ebenfalls als Tenside oder Emulgatoren im Rahmen der erfindungsmäßen Zusammensetzungen geeignet sind Aminoxide oder Alkylamido-aminoxide.

Ein erfindungsgemäßes Bindemittelgemisch kann darüber hinaus auch ein oder mehrere kationische Tenside enthalten. Als kationischen Tenside eignen sich insbesondere solche, welche eine quaternäre Ammoniumgruppe enthalten. Dabei kann es sich um kationische oder um amphotere, betainische Tenside handeln. Geeignete kationische Tenside enthalten Aminogruppen oder quaternisierte hydrophile Ammoniumgruppen, welche in Lösung eine positive Ladung tragen und durch die allgemeine Formel N(+)R¹R²R³R⁴ X⁽⁻⁾ dargestellt werden können, wobei R¹ bis R⁴ unabhängig voneinander aliphatische Gruppen, aromatische Gruppen, Alkoxygruppen, Polyoxyalkylengruppen, Alkylamidogruppen, Hydroxyalkylgruppen, Arylgruppen oder Alkarylgruppen mit jeweils 1 bis 22 C-Atomen bedeuten und X(-) ein kosmetisch verträgliches Anion darstellt, ausgewählt aus Halogen, Acetat, Phosphat, Nitrat oder Alkylsulfat, vorzugsweise ist es ein Chlorid.

Um die tensidischen Eigenschaften zu gewährleisten, weist mindestens einer der Reste R¹ bis R⁴ mindestens 8 C-Atome auf. Die aliphatischen Gruppen können zusätzlich zu den Kohlenstoffatomen und den Wasserstoffatomen auch Querverbindungen oder andere Gruppen wie z.B. weitere Aminogruppen enthalten. Beispiele für geeignete kationische Tenside sind insbesondere quarternäre Ammoniumverbindungen, Bevorzugt sind Ammoniumhalogenide, insbesondere die Chloride oder Bromide hiervon wie Alkyldimethylbenzylammoniumsalze, Alkyltrimethylammoniumsalze, Dialkyldimethylammoniumchloride und Trialkylmethylammoniumchloride oder die Bromide hiervon, beispielsweise Cetyltrimethylammoniumchlorid oder -bromid, Stearyltrimethylammoniumchlorid oder-bromid, Distearyltrimethylammoniumchlorid oder -bromid, Lauryldimethylbenzylammoniumchlorid oder -bromid, Tetradecyltrimethyl-ammoniumchloride oder - bromid, Alkyldimethylhydroxyethylammoniumchloride oder -bromide, Alkyltrimethylammoniumchlorid oder -bromid, Dialkyl-dimethylammoniumchlorid oder -bromid, Alkylpyridiniumsalze, beispielsweise Lauryl- oder Cetylpyridiniumchlorid, Alkylamidoethyltrimethylammonium-ethersulfate sowie Verbindungen mit kationischem Charakter wie Aminoxide, beispielsweise Alkylmethylaminoxide oder Alkylaminoethyldimethylaminoxide.

In einer bevorzugten Ausführungsform enthalten die erfindungsgemäßen Zusammensetzungen 0 bis etwa 50 Gew.-%, beispielsweise etwa 0 bis etwa 50 oder etwa 1 bis etwa 30 oder etwa 2 bis 25 oder etwa 3 bis etwa 22 oder etwa 4 bis etwa 20 oder etwa 5 bis etwa 15 oder etwa 7 bis etwa 13 oder etwa 8 bis etwa 12, beispielsweise etwa 9 bis etwa 11 oder etwa 10 Gew.-%, anionische, kationische oder nichtionische Tenside, oder Gemische aus zwei oder mehr davon, beispielsweise ein Gemisch aus einem oder mehreren anionischen Tensiden und einem oder mehreren nichtionischen Tensiden oder einem oder mehreren kationischen Tensiden oder einem oder mehreren nichtionischen Tensiden, berechnet als Aktivsubstanz, bezogen auf die gesamte Zusammensetzung.

Lösungsmittel sind beispielsweise dann in dem Fettsäuresalzgemisch enthalten, wenn es als flüssiges Mittel eingesetzt werden soll. Geeignete Lösungsmittel sind beispielsweise Wasser oder organische Lösungsmittel wie Alkohole, beispielsweise Ethanol.

Als Bindemittel werden beispielsweise wasserlösliche oder wasserdispergierbare Bindemittel eingesetzt. Solche Stoffe sind in der Literatur bekannt. Bevorzugt werden Stoffe eingesetzt, die bei Raumtemperatur, d.h. zwischen 20 und 25°C, eine wachsartige, hochviskose oder feste Konsistenz haben und die einen Schmelzpunkt von 25°C bis 150°C aufweisen. Beispiele für übliche entsprechende Bindungsmaterialien sind Polyvinylalkohol, Methylzellulose, Carboxymethylzellulose, ethoxylierte Fettalkohole oder Mischungen davon. Außerdem können Fettsäureester oder filmbildende Polymere eingesetzt werden. Die Bindungsmaterialien sollten nicht oder nur möglichst wenig den Hydratisierungsprozess des Baumaterials stören, wenn Wasser eingeführt wird.

Bevorzugte Kolloide sind teilverseifte und vollverseifte Polyvinylalkohole; Polyvinylpyrrolidone, Polyvinylacetale, Polysaccharide in wasserlöslicher Form wie Stärken (Amylose und Amylopectin), Cellulosen und deren Carboxymethyl-, Methyl- , Hydroxyethyl-, Hydroxypropyl-Derivate, Proteine wie Casein oder Caseinat, Sojaprotein, Gelatine, Ligninsulfonate, synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Der Anteil an Kolloiden liegt bevorzugt zwischen 20 und 80 Gew.-%, insbesondere zwischen 50 und 60 %. Bevorzugt sind mindestens 2, 5 oder 10 und maximal 20, 50 oder 80 % Kolloide enthalten.

Bevorzugt werden als Kolloide teilverseifte oder vollverseifte Polyvinylalkohole mit einem Hydrolysegrad von 80 bis 100 Mol-%, insbesondere von 80 bis 95 Mol-% und einer Höpplerviskosität (in 4 %-iger wässriger Lösung) von 1 bis 30mPas, vorzugsweise 3 bis 15mPas (Methode nach Höppler bei 20 °C, DIN 53015), einsetzt. Bevorzugt sind auch teilverseifte oder vollverseifte, hydrophob modifizierte Polyvinylalkohole mit einem Hydrolysegrad von 80 bis 100 Mol-% und einer Höpplerviskosität in 4%-iger wässriger Lösung von 1 bis 30mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethen, Propen und Decen. Der Anteil der hydrophoben Einheiten beträgt vorzugsweise 0.1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol%. Es können auch Gemische der genannten Polyvinylalkohole eingesetzt werden.

Besonders bevorzugte Polymere sind solche, die in Wasser redispergierbar sind. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide. Weitere geeignete Polymere werden in der WO2004/103928 auf den Seiten 8 bis 10 genannt, auf die hier ausdrücklich Bezug genommen wird.

Zur Erhöhung der Lagerfähigkeit kann ein Antiblockmittel (Antibackmittel) zugesetzt werden. Beispiele für Antiblockmittel sind Calcium und Magnesiumcarbonat, Talg, Kieselsäure, Kaoline, Silicate, vorzugsweise mit Teilchengrößen im Bereich zwischen 10 nm und 100 µm. Der Anteil der Antiblockmittel an dem Hydrophobierungsmittel ist in bevorzugten Ausführungsformen zwischen 0,5 und 30, insbesondere zwischen 1 und 20 Gew.%. Bevorzugt sind bis zu 5, 10 oder 20 Gew.% Antiblockmittel enthalten.

Bevorzugte Füllstoffe sind mineralische oder anorganische Füllstoffe, wie beispielsweise Tone, Sand, Kies, Schlacke, Glas, Kiesel-Gele, Sulfate, Oxide, Glas- und Mineralfasern, Kunststoff Fasern, Mikrohohlkugeln, organische Leichtfiillstoffe (zum Beispiel Polystyrolschaum), Papierpulver, Holzspäne und Zellulosefasern. Die Füllstoffe können Bestandteil des Fettsäuresalzgemischs sein.

Als weitere Zusatzstoffe können beispielsweise Organo(poly)siloxane eingesetzt werden. Entsprechende Materialien sind in der DE 601 08 152 T2, insbesondere in den Absätzen [0015] bis [0017] offenbart, auf die hier ausdrücklich Bezug genommen wird.

Viskositätsverbesserer dienen beispielsweise dazu, die Fließeigenschaften oder die Verarbeitbarkeit eines Fettsäuresalzgemischs zu verändern. Zusatzstoffe, die das Fließverhalten des Putzes verändern, werden auch als rheologieverändernde Zusatzstoffe bezeichnet.

Als Pigmente können beispielsweise Titandioxid, Zinkoxid oder Zinksulfid eingesetzt werden.

Ein erfindungsgemäßes Bindemittelgemisch enthält mindestens ein mineralisches Bindemittel auf Basis von Calciumsulfat. Vorzugsweise handelt es sich bei dem mineralischen Bindemittel auf Basis von Calciumsulfat um eine im weitesten Sinne als Gips zu verstehende Erscheinungsform eines derartigen mineralischen Bindemittels. Geeignet sind hierbei grundsätzlich beliebige Arten und Formen von Gips, der beispielsweise aus natürlichem Vorkommen, aus synthetischen Quellen oder aus der Reinigung von Rauchgasen, sogenannter Rauchgasgips, stammen kann.

Ein entsprechendes erfindungsgemäßes Bindemittelgemisch lässt sich insbesondere zur Herstellung von Baumaterialien wie Gipsformkörpern, beispielsweise Gipswandbauplatten oder Gipskartonplatten einsetzen. Bei der Herstellung von Platten und Formkörpern auf Gipsbasis wird üblicher Weise derart verfahren, dass das Halbhydrat, mindestens β-Halbhydrat oder ein Gemisch aus β- und α-Halbhydrat mit Wasser angemacht wird, und aus diesem plastischen Brei ein entsprechender Formkörper oder eine Platte geformt wird. Das Bindemittel wird dabei in bekannter Weise mit entsprechenden Kartonplatten versehen, was letztendlich zum häufig eingesetzten Gipskarton führt.

Ein erfindungsgemäßes Bindemittelgemisch kann beispielsweise als Granulat, Pulver, Lösung, Dispersion oder Emulsion vorliegen. Es ist in einigen Fällen bevorzugt, wenn das Fettsäuresalzgemisch beispielsweise in Form eines Granulats bereitgestellt wird. Ein solches granuliertes Fettsäuresalzgemisch kann nach üblichen oder bekannten Granulierungsverfahren hergestellt werden. In einer besonders bevorzugten Ausführungsform der Erfindung ist das

Fettsäuresalzgemisch ein Granulat, das mindestens die folgenden Komponenten enthält:
- 40 bis 95 Gew.% Fettsäuresalze,
- 1 bis 20 Gew.-% mindestens eines ein- oder mehrwertigen Alkohols
- 10 bis 50 Gew.% eines wasserlöslichen oder wasserdispergierbaren Bindemittels
- 0 bis 60 Gew.-% mindestens eines Emulgators und
- 0 bis 30 Gew.-% weiterer Zusatzstoffe.

In einer weiteren Ausführungsform der Erfindung kann das Fettsäuresalzgemisch als Pulver eingesetzt werden. Solche Pulver können beispielsweise durch vermischen mit einem Baumaterial, beispielsweise einem Mörtel, auf die Oberfläche der Körner des Baumaterials aufgebracht werden.

Gegenstand der Erfindung ist demnach auch ein Baumaterial, das ein Bindemittelgemisch gemäß Anspruch 1 enthält. Vorzugsweise handelt es sich bei dem Baumaterial um Gipsformkörper, Gipsplatten oder Gipskartonplatten.

Der bevorzugte Anteil des Hydrophobierungsmittels an dem Baumaterial liegt bevorzugt zwischen 0,01 und 5 Gew.%, besonders bevorzugt zwischen 0,2 und 3 Gew.-% und zwischen 0,5 und 1 Gew.-%. In besonders bevorzugten Ausführungsformen sind mindestens 0,01, 0,02 oder 0,5 Gew.% und/oder bis zu 0,5, 1 oder 2 Gew.% des Hydrophobierungsmittels enthalten.

Gegenstand der Erfindung ist auch ein hydrophobiertes Bauteil, gemäß Anspruch 15 erhältlich durch ein Verfahren, bei dem ein erfindungsgemäßes Bindemittelgemisch ausgehärtet wird.

In einer bevorzugten Ausführungsform werden Fettsäuresalze verwendet, ausgewählt aus der Gruppe bestehend aus Fettsäuresalzen der Capryl-, Pelargon-, Caprin-, Laurin-, Myristin-, Palmitin-, Margarin-, Undecylen- und Palmitoleinsäure sowie die Spaltprodukte des Ricinusöls bzw. weiterer Hydroxyfettsäuren. In einer bevorzugten Ausführungsform macht die Summe der Anteile der Fettsäuresalze der Capryl-, Laurin- und Myristinsäure an den gesamten Fettsäuresalzen mehr als 50 Gew.-% aus. In einer weiteren bevorzugten Ausführungsform der Erfindung sind die Fettsäuresalze Hydrolyseprodukte oder Oxidationsprodukte eines natürlichen Fettes.

Die Erfindung betrifft auch ein Verfahren gemäß Anspruch 16 zur Herstellung eines Bindemittelgemischs, bei dem als Edukt ein Fettsäuregemisch oder ein Gemisch von Fettsäureestern oder ein Gemisch von Fettsäuren und Fettsäureestern, wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% oder der Anteil an Fettsäuren mit 8 bis 14 C-Atomen 10 Gew.-% oder mehr als 10 Gew.%, bezogen auf die Gesamtmenge der Fettsäuresalze im Fettsäuresalzgemisch, oder beides, ausmacht, gleichzeitig oder nacheinander mit mindestens zwei Metallverbindungen von Metallen aus der Gruppe der Alkalimetalle, Erdalkalimetalle, Zink, Aluminium oder der seltenen Erden, die zu einer Salzbildung mit Fettsäuren unter den gewählten Verfahrensbedingungen in der Lage sind, oder mindestens zwei Aminoverbindungen, die zu einer Ammoniumsalzbildung mit Fettsäuren unter den gewählten Verfahrensbedingungen in der Lage sind so versetzt wird, dass als Produkt ein Gemisch aus Fettsäuresalzen mit mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.% oder mehr als 20 Gew.% oder der Anteil an Fettsäuren mit 8 bis 14 C-Atomen mehr als 10 Gew.-%, bezogen auf die Gesamtmenge der Fettsäuresalze im Fettsäuresalzgemisch, oder beides, ausmacht, entsteht, und dieses mit einem mineralischen Bindemittel auf Basis von Calciumsulfat versetzt wird.

Es handelt sich bei den Metallverbindungen von Metallen aus der Gruppe der Alkalimetalle, Erdalkalimetalle, Zink, Aluminium oder der seltenen Erden, die zu einer Salzbildung mit Fettsäuren unter den gewählten Verfahrensbedingungen in der Lage sind, um basische Verbindungen, insbesondere um Verbindungen aus der Gruppe der Oxide, Hydroxide, Carbonate.

So können beispielsweise als Verbindungen von Metallen aus der Gruppe der Alkalimetalle, Erdalkalimetalle, Zink, Aluminium oder der seltenen Erden, oder als Ammoniumverbindungen, die zu einer Salzbildung mit Fettsäuren unter den gewählten Verfahrensbedingungen in der Lage sind, Calciumhydroxid, Natriumhydroxid, Kaliumhydroxid, oder Ammoniumhydroxid eingesetzt werden.

Als Edukt wird beispielsweise ein Gemisch von Fettsäureestern, insbesondere von Triglyzeriden, eingesetzt. Besonders geeignet ist das erfindungsgemäße Verfahren wenn als Gemisch von Fettsäureestern ein natürliches Fett oder Öl eingesetzt wird.

Das erfindungsgemäße Verfahren lässt sich beispielsweise auch dahingehend durchführen, dass die mindestens zwei Verbindungen von Metallen aus der Gruppe der Alkalimetalle, Erdalkalimetalle, Zink, Aluminium oder der seltenen Erden, oder Aminoverbindungen die zu einer Salzbildung mit Fettsäuren unter den gewählten Verfahrensbedingungen in der Lage sind in einer Menge von 5 bis 95 Gew.-%, bezogen auf das Gewicht des Fettsäuregemischs oder des Gemischs von Fettsäureestern oder des Gemischs von Fettsäuren und Fettsäureestern, eingesetzt werden.

In weiteren bevorzugten Ausführungsformen der Erfindung sind Zusatzstoffe enthalten, wie oben bei den erfindungsgemäßen Bindemittelgemischen beschrieben. Besonders bevorzugt sind dabei Lösungsmittel, Lösungsvermittler, Füllstoffe, weitere Hydrophobierungsmittel, weitere mineralische oder nicht-mineralische Bindemittel, Tenside, Emulgatoren, Viskositätsverbesserer, oberflächenaktive Substanzen, Pigmente, Farbstoffe, Konservierungsstoffe, Geliermittel, Antibackmittel, pH-Modifikationsmittel, Puffer, Reaktionsbeschleuniger, Reaktionsverzögerer, Kolloide, Polymere und/oder Luftschleppmittel enthalten. In bevorzugten Ausführungsformen erfolgt die Verwendung als Granulat, Pulver, Lösung, Dispersion, Suspension oder Emulsion.

## Patentansprüche

1. Bindemittelgemisch, enthaltend ein mineralisches Bindemittel auf Basis von Calciumsulfat und mindestens ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% oder der Anteil an Fettsäuren mit 8 bis 14 C-Atomen 10 Gew.-% oder mehr als 10 Gew.%, bezogen auf die Gesamtmenge der Fettsäuresalze im Fettsäuresalzgemisch, oder beides, ausmacht.

2. Bindemittelgemisch nach Anspruch 1, **dadurch gekennzeichnet, dass** mindestens ein Fettsäuresalz eines der Metalle Natrium-, Kalium-, Zink, Magnesium oder Calcium enthält.

3. Bindemittelgemisch nach Anspruch 1 oder 2, **dadurch gekennzeichnet, dass** es einen mehrwertigen Alkohol enthält.

4. Bindemittelgemisch nach einem der Ansprüche 1 bis 3, **dadurch gekennzeichnet, dass** es mindestens einen Zusatzstoff ausgewählt aus Lösungsmitteln, Bindemitteln, Polymeren, Kolloiden, Tensiden, Emulgatoren oder Lösungsmitteln, oder ein Gemisch aus zwei oder mehr davon, enthält.

5. Bindemittelgemisch nach einem der Ansprüche 1 bis 4, **dadurch gekennzeichnet, dass** der Anteil der Fettsäuresalze von Fettsäuren mit 8 bis 17 C-Atomen, bezogen auf die Gesamtmenge der Fettsäuresalze im Bindemittelgemisch, 20 Gew.-% oder mehr als 20 Gew.-% ausmacht.

6. Bindemittelgemisch nach einem der Ansprüche 1 bis 5, **dadurch gekennzeichnet, dass** das Fettsäuresalz, das an den gesamten Fettsäuresalzen den größten Anteil in Gewichtsprozent ausmacht, ein Salz einer Fettsäure mit 8 bis 17 C-Atomen ist.

7. Bindemittelgemisch nach einem der Ansprüche 1 bis 6, **dadurch gekennzeichnet, dass** die durchschnittliche Kettenlänge der gesamten Fettsäuresalze im Bindemittelgemisch in einem Bereich von 12 bis 16 C-Atomen liegt.

8. Bindemittelgemisch nach einem der Ansprüche 1 bis 7, **dadurch gekennzeichnet, dass** die Fettsäuresalze ausgewählt sind aus der Gruppe bestehend aus Fettsäuresalzen der Capryl-, Pelargon-, Caprin-, Laurin-, Myristin-, Palmitin-, Margarin-, Undecylen- und Palmitoleinsäure.

9. Bindemittelgemisch nach einem der Ansprüche 1 bis 8, **dadurch gekennzeichnet, dass** die Summe der Anteile der Salze von Fettsäuren mit mehr 12 bis 16 C-Atomen im Fettsäurerest an den gesamten Fettsäuresalzen mehr als 50 Gew.-% ausmacht.

10. Bindemittelgemisch nach einem der Ansprüche 1 bis 9, **dadurch gekennzeichnet, dass** der Gesamtanteil der Fettsäuresalze an Bindemittelgemisch zwischen 5 und 95 Gew.-% liegt.

11. Bindemittelgemisch nach einem der Ansprüche 1 bis 10, **dadurch gekennzeichnet, dass** die Fettsäuresalze Hydrolyseprodukte eines natürlichen Fetts oder Öls sind.

12. Bindemittelgemisch nach einem der Ansprüche 1 bis 11, **dadurch gekennzeichnet, dass** es ein Granulat, ein Pulver, eine Lösung, eine Dispersion oder eine Emulsion ist.

13. Gipskartonplatte, enthaltend ein Bindemittelgemisch gemäß einem der Ansprüche 1 bis 12.

14. Bindemittelgemisch nach einem der Ansprüche 1 bis 12 oder Gipskartonplatte nach Anspruch 13, **dadurch gekennzeichnet, dass** als Zusatzstoff mindestens eine Verbindung ausgewählt aus Lösungsmitteln, Lösungsvermittlern, Füllstoffen, weiteren Hydrophobierungsmitteln, Bindemitteln, Tensiden, Emulgatoren, Viskositätsverbesserern, oberflächenaktiven Substanzen, Pigmenten, Farbstoffen, Konservierungsstoffen, Geliermitteln, Antibackmitteln, pH-Modifikationsmitteln, Puffern, Reaktionsbeschleunigern, Reaktionsverzögerem, Kolloiden, Polymeren und/oder Luftschleppmitteln enthalten sind.

15. Hydrophobiertes Bauteil, erhältlich durch aushärten eines Bindemittelgemischs gemäß einem der Ansprüche 1 bis 12.

16. Verfahren zur Herstellung eines Bindemittelgemischs, bei dem als Edukt ein Fettsäuregemisch oder ein Gemisch von Fettsäureestern oder ein Gemisch von Fettsäuren und Fettsäureestern, wobei beim Fettsäuregemisch oder dem Gemisch von Fettsäureestern der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% oder der Anteil an Fettsäuren mit 8 bis 14 C-Atomen 10 Gew.% oder mehr als 10 Gew.-%, bezogen auf die Gesamtmenge der Fettsäuresalze im Fettsäuresalzgemisch, oder beides, ausmacht, gleichzeitig oder nacheinander mit mindestens zwei Metallverbindungen von Metallen. aus der Gruppe der Alkalimetalle, Erdalkalimetalle, Zink, Aluminium oder der seltenen Erden, oder mit zwei Ammoniumverbindungen die zu einer Salzbildung mit Fettsäuren unter den gewählten Verfahrensbedingungen in der Lage sind, so versetzt wird, dass als Produkt ein Gemisch aus Fettsäuresalzen von mindestens zwei verschiedenen Metallen ausgewählt aus der Gruppe bestehend aus Alkalimetallen, Erdalkalimetallen, Zink, Aluminium und seltenen Erden, oder mindestens zwei verschiedenen Ammoniumverbindungen oder einem Gemisch aus mindestens einer Metallverbindung und mindestens einer Ammoniumverbindung, wobei der Anteil der Fettsäuresalze von Fettsäuren mit 8 bis 17 C-Atomen, bezogen auf die Gesamtmenge der Fettsäuresalze im Bindemittelgemisch, 20 Gew.-% oder mehr als 20 Gew.-% oder der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch, oder beides ausmacht, entsteht und das Produkt anschließend mit einem mineralischen Bindemittel auf Basis von Calciumsulfat vermischt wird.

17. Verfahren nach Anspruch 16, **dadurch gekennzeichnet, dass** es sich bei den mindestens zwei Metallverbindungen von Metallen aus der Gruppe der Alkalimetalle, Erdalkalimetalle, Zink, Aluminium oder der seltenen Erden die zu einer Salzbildung mit Fettsäuren unter den gewählten Verfahrensbedingungen in der Lage sind, um basische Verbindungen, insbesondere um Verbindungen aus der Gruppe der Oxide, Hydroxide, Carbonate handelt.

18. Verfahren nach Anspruch 16 oder 17, **dadurch gekennzeichnet, dass** als Metallverbindungen von Metallen aus der Gruppe der Alkalimetalle, Erdalkalimetalle, Zink, Aluminium oder der seltenen Erden, die zu einer Salzbildung mit Fettsäuren unter den gewählten Verfahrensbedingungen in der Lage sind, Calciumhydroxid, Natriumhydroxid oder Kaliumhydroxid eingesetzt wird.

19. Verfahren nach einem der Ansprüche 16 bis 18, **dadurch gekennzeichnet, dass** als Edukt ein Gemisch von Fettsäureestern eingesetzt wird.

20. Verfahren nach Anspruch 19, **dadurch gekennzeichnet, dass** als Gemisch von Fettsäureestern ein natürliches Fett oder Öl eingesetzt wird.

21. Verfahren nach einem der Ansprüche 16 bis 20, **dadurch gekennzeichnet, dass** die mindestens zwei Metallverbindungen von Metallen aus der Gruppe der Alkalimetalle, Erdalkalimetalle, Zink, Aluminium oder der seltenen Erden, die zu einer Salzbildung mit Fettsäuren unter den gewählten Verfahrensbedingungen in der Lage sind in einer Menge von 1 bis 50 Gew.-%, bezogen auf das Gewicht des Fettsäuregemischs oder des Gemischs von Fettsäureestern oder des Gemischs von Fettsäuren und Fettsäureestern, eingesetzt wird.

## Claims

1. Binder mixture comprising a mineral binder based on calcium sulfate and at least one mixture of fatty acid salts of at least two different metal cations or two different ammonium cations or a mixture of at least one metal cation and at least one ammonium cation, the metal cations being selected from the group consisting of alkali metals, alkaline earth metals, zinc, aluminum and rare earths, and the proportion of the fatty acid salts of fatty acids having 8 to 17 carbon atoms, based on the total amount of the fatty acid salts in the fatty acid salt mixture, amounting to 20% by weight or more than 20% by weight, or the proportion of fatty acids having 8 to 14 carbon atoms amounting to 10% by weight or more than 10% by weight, based on the total amount of the fatty acid salts in the fatty acid salt mixture, or both.

2. Binder mixture according to Claim 1, **characterized in that** at least one fatty acid salt contains one of the metals sodium, potassium, zinc, magnesium or calcium.

3. Binder mixture according to Claim 1 or 2, **characterized in that** it contains a polyhydric alcohol.

4. Binder mixture according to any of Claims 1 to 3, **characterized in that** it contains at least one additive selected from solvents, binders, polymers, colloids, surfactants, emulsifiers or solvents, or a mixture of two or more thereof.

5. Binder mixture according to any of Claims 1 to 4, **characterized in that** the proportion of the fatty acid salts of fatty acids having 8 to 17 carbon atoms, based on the total amount of the fatty acid salts in the binder mixture, amounts to 20% by weight or more than 20% by weight.

6. Binder mixture according to any of Claims 1 to 5, **characterized in that** the fatty acid salt which amounts to the greatest proportion in percent by weight of all of the fatty acid salts is a salt of a fatty acid having 8 to 17 carbon atoms.

7. Binder mixture according to any of Claims 1 to 6, **characterized in that** the average chain length of all of the fatty acid salts in the binder mixture is within a range from 12 to 16 carbon atoms.

8. Binder mixture according to any of Claims 1 to 7, **characterized in that** the fatty acid salts are selected from the group consisting of fatty acid salts of caprylic acid, pelargonic acid, capric acid, lauric acid, myristic acid, palmitic acid, margaric acid, undecylenic acid and palmitoleic acid.

9. Binder mixture according to any of Claims 1 to 8, **characterized in that** the sum of the proportions of the salts of fatty acids having more than 12 to 16 carbon atoms in the fatty acid radical in all of the fatty acid salts amounts to more than 50% by weight.

10. Binder mixture according to any of Claims 1 to 9, **characterized in that** the total proportion of the fatty acid salts in the binder mixture is between 5 and 95% by weight.

11. Binder mixture according to any of Claims 1 to 10, **characterized in that** the fatty acid salts are hydrolysis products of a natural fat or oil.

12. Binder mixture according to any of Claims 1 to 11, **characterized in that** it is a granule, a powder, a solution, a dispersion or an emulsion.

13. Gypsum plasterboard comprising a binder mixture according to any of Claims 1 to 12.

14. Binder mixture according to any of Claims 1 to 12 or gypsum plasterboard according to Claim 13, **characterized in that** at least one compound selected from solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, polymers and/or air entrainers is present as an additive.

15. Hydrophobed component obtainable by setting a binder mixture according to any of Claims 1 to 12.

16. Process for preparing a binder mixture, in which, as the reactant, a fatty acid mixture or a mixture of fatty acid esters or a mixture of fatty acids and fatty acid esters, the proportion of the fatty acid salts of fatty acids having 8 to 17 carbon atoms, based on the total amount of the fatty acid salts in the fatty acid salt mixture, in the fatty acid mixture or the mixture of fatty acid esters amounting to 20% by weight or more than 20% by weight, or the proportion of fatty acids having 8 to 14 carbon atoms amounting to 10% by weight or more than 10% by weight, based on the total amount of the fatty acid salts in the fatty acid salt mixture, or both, is admixed simultaneously or successively with at least two metal compounds of metals from the group of the alkali metals, alkaline earth metals, zinc, aluminum or the rare earths, or with two ammonium compounds which are capable of salt formation with fatty acids under the process conditions selected such that the product formed is a mixture of fatty acid salts of at least two different metals selected from the group consisting of alkali metals, alkaline earth metals, zinc, aluminum and rare earths, or at least two different ammonium compounds or a mixture of at least one metal compound and at least one ammonium compound, the proportion of fatty acid salts of fatty acids having 8 to 17 carbon atoms, based on the total amount of the fatty acid salts in the binder mixture, amounting to 20% by weight or more than 20% by weight, or the proportion of fatty acids having 8 to 14 carbon atoms amounting to 10% by weight or more than 10% by weight, based on the total amount of the fatty acid salts in the fatty acid salt mixture, or both, and the product is then mixed with a mineral binder based on calcium sulfate.

17. Process according to Claim 16, **characterized in that** the at least two metal compounds of metals from the group of the alkali metals, alkaline earth metals, zinc, aluminum or the rare earths, which are capable of salt formation with fatty acids under the process conditions selected, are basic compounds, especially compounds from the group of the oxides, hydroxides, carbonates.

18. Process according to Claim 16 or 17, **characterized in that** calcium hydroxide, sodium hydroxide or potassium hydroxide is used as the metal compound of metals from the group of the alkali metals, alkaline earth metals, zinc, aluminum or the rare earths, which are capable of salt formation with fatty acids under the process conditions selected.

19. Process according to any of Claims 16 to 18, **characterized in that** the reactant used is a mixture of fatty acid esters.

20. Process according to Claim 19, **characterized in that** the mixture of fatty acid esters used is a natural fat or oil.

21. Process according to any of Claims 16 to 20, **characterized in that** the at least two metal compounds of metals from the group of the alkali metals, alkaline earth metals, zinc, aluminum or the rare earths, which are capable of salt formation with fatty acids under the process conditions selected, are used in an amount of 1 to 50% by weight, based on the weight of the fatty acid mixture or of the mixture of fatty acid esters or of the mixture of fatty acids and fatty acid esters.

## Revendications

1. Mélange de liant, contenant un liant minéral à base de sulfate de calcium et au moins un mélange de sels d'acide gras d'au moins deux cations métalliques différents ou deux cations d'ammonium différents ou d'un mélange d'au moins un cation métallique et d'au moins un cation d'ammonium, les cations métalliques étant choisis dans le groupe constitué par les métaux alcalins, les métaux alcalino-terreux, le zinc, l'aluminium et les terres rares et la proportion des sels d'acide gras comprenant 8 à 17 atomes de carbone, par rapport à la quantité totale des sels d'acide gras dans le mélange de sels d'acide gras, représentant 20% en poids ou plus de 20% en poids ou la proportion d'acides gras comprenant 8 à 14 atomes de carbone représentant 10% en poids ou plus de 10% en poids, par rapport à la quantité totale des sels d'acide gras dans le mélange de sels d'acide gras, ou les deux.

2. Mélange de liant selon la revendication 1, **caractérisé en ce qu'**au moins un sel d'acide gras contient un des métaux sodium, potassium, zinc, magnésium ou calcium.

3. Mélange de liant selon la revendication 1 ou 2, **caractérisé en ce qu'**il contient un alcool polyvalent.

4. Mélange de liant selon l'une quelconque des revendications 1 à 3, **caractérisé en ce qu'**il contient au moins un additif choisi parmi les solvants, les liants, les polymères, les colloïdes, les agents tensioactifs, les émulsifiants ou les solvants ou un mélange de deux ou de plus de deux de ceux-ci.

5. Mélange de liant selon l'une quelconque des revendications 1 à 4, **caractérisé en ce que** la proportion des sels d'acide gras comprenant 8 à 17 atomes de carbone, par rapport à la quantité totale des sels d'acide gras dans le mélange de liant, représente 20% en poids ou plus de 20% en poids.

6. Mélange de liant selon l'une quelconque des revendications 1 à 5, **caractérisé en ce que** le sel d'acide gras, qui représente la proportion la plus importante en pourcentage en poids par rapport à la totalité des sels d'acide gras, est un sel d'un acide gras comprenant 8 à 17 atomes de carbone.

7. Mélange de liant selon l'une quelconque des revendications 1 à 6, **caractérisé en ce que** la longueur de chaîne moyenne de la totalité des sels d'acide gras dans le mélange de liant se situe dans une plage de 12 à 16 atomes de carbone.

8. Mélange de liant selon l'une quelconque des revendications 1 à 7, **caractérisé en ce que** les sels d'acide gras sont choisis dans le groupe constitué par les sels d'acide gras de l'acide caprylique, pélargonique, caprique, laurique, myristique, palmitique, margarique, undécylénoïque et palmitoléique.

9. Mélange de liant selon l'une quelconque des revendications 1 à 8, **caractérisé en ce que** la somme des proportions des sels d'acide gras comprenant plus de 12 à 16 atomes de carbone dans le radical d'acide gras par rapport à la totalité des sels d'acide gras représente plus de 50% en poids.

10. Mélange de liant selon l'une quelconque des revendications 1 à 9, **caractérisé en ce que** la proportion totale des sels d'acide gras par rapport au mélange de liant se situe entre 5 et 95% en poids.

11. Mélange de liant selon l'une quelconque des revendications 1 à 10, **caractérisé en ce que** les sels d'acide gras sont des produits d'hydrolyse d'une graisse ou d'une huile naturelle.

12. Mélange de liant selon l'une quelconque des revendications 1 à 11, **caractérisé en ce qu'**il s'agit d'un granulat, d'une poudre, d'une solution, d'une dispersion ou d'une émulsion.

13. Plaque de plâtre cartonné, contenant un mélange de liant selon l'une quelconque des revendications 1 à 12.

14. Mélange de liant selon l'une quelconque des revendications 1 à 12 ou plaque de plâtre cartonné selon la revendication 13, **caractérisé en ce qu'**il/elle contient, comme additif, au moins un composé choisi parmi les solvants, les promoteurs de solubilisation, les charges, d'autres agents d'hydrofugation, les liants, les tensioactifs, les émulsifiants, les agents d'amélioration de la viscosité, les substances tensioactives, les pigments, les colorants, les conservateurs, les gélifiants, les agents antiagglomérants, les agents de modification du pH, les tampons, les accélérateurs de réaction, les retardateurs de réaction, les colloïdes, les polymères et/ou les agents d'entraînement d'air.

15. Elément de construction hydrofugé, pouvant être obtenu par durcissement d'un mélange de liant selon l'une quelconque des revendications 1 à 12.

16. Procédé pour la préparation d'un mélange de liant, dans lequel, comme produit de départ, un mélange d'acides gras ou un mélange d'esters d'acide gras ou un mélange d'acides gras et d'esters d'acide gras, la proportion des sels d'acide gras, dans le mélange d'acides gras ou le mélange d'esters d'acide gras, d'acides gras comprenant 8 à 17 atomes de carbone, par rapport à la quantité totale des sels d'acide gras dans le mélange de sels d'acide gras, représentant 20% en poids ou plus de 20% en poids ou la proportion d'acides gras comprenant 8 à 14 atomes de carbone représentant 10% en poids ou plus de 10% en poids, par rapport à la quantité totale des sels d'acide gras dans le mélange de sels d'acide gras, ou les deux, est additionné simultanément ou consécutivement d'au moins deux composés métalliques de métaux du groupe constitué par les métaux alcalins, les métaux alcalino-terreux, le zinc, l'aluminium et les terres rares, ou d'au moins deux composés d'ammonium qui sont aptes à une formation de sel avec des acides gras dans les conditions de procédé choisies, de manière telle qu'il se forme comme produit un mélange de sels d'acide gras d'au moins deux métaux différents choisis dans le groupe constitué par les métaux alcalins, les métaux alcalino-terreux, le zinc, l'aluminium et les terres rares ou d'au moins deux composés d'ammonium différents ou un mélange d'au moins un composé métallique et d'au moins un composé d'ammonium, la proportion des sels d'acide gras comprenant 8 à 17 atomes de carbone, par rapport à la quantité totale des sels d'acide gras dans le mélange de liant, représentant 20% en poids ou plus de 20% en poids ou la proportion d'acides gras comprenant 8 à 14 atomes de carbone représentant 10% en poids ou plus de 10% en poids, par rapport à la quantité totale des sels d'acide gras dans le mélange de sels d'acide gras, ou les deux, et le produit est ensuite mélangé avec un liant minéral à base de sulfate de calcium.

17. Procédé selon la revendication 16, **caractérisé en ce qu'**il s'agit, pour lesdits au moins deux composés métalliques de métaux du groupe des métaux alcalins, des métaux alcalino-terreux, du zinc, de l'aluminium ou des terres rares, qui sont aptes à une formation de sel avec des acides gras dans les conditions de procédé choisies, de composés basiques, en particulier de composés du groupe des oxydes, des hydroxydes, des carbonates.

18. Procédé selon la revendication 16 ou 17, **caractérisé en ce qu'**on utilise, comme composés métalliques de métaux du groupe des métaux alcalins, des métaux alcalino-terreux, du zinc, de l'aluminium ou des terres rares, qui sont aptes à une formation de sel avec des acides gras dans les conditions de procédé choisies, de l'hydroxyde de calcium, de l'hydroxyde de sodium ou de l'hydroxyde de potassium.

19. Procédé selon l'une quelconque des revendications 16 à 18, **caractérisé en ce qu'**on utilise, comme produit de départ, un mélange d'esters d'acide gras.

20. Procédé selon la revendication 19, **caractérisé en ce qu'**on utilise, comme mélange d'esters d'acide gras, une graisse ou une huile naturelle.

21. Procédé selon l'une quelconque des revendications 16 à 20, **caractérisé en ce que** lesdits au moins deux composés métalliques de métaux du groupe des métaux alcalins, des métaux alcalino-terreux, du zinc, de l'aluminium ou des terres rares, qui sont aptes à une formation de sel avec des acides gras dans les conditions de procédé choisies, sont utilisés en une quantité de 1 à 50% en poids, par rapport au poids du mélange d'acides gras ou du mélange d'esters d'acide gras ou du mélange d'acides gras et d'esters d'acide gras.
